(19) Europäisches Patentamt
European Patent Office
Office européen des brevets

(11) EP 0 386 585 B1

(12) EUROPEAN PATENT SPECIFICATION

(45) Date of publication and mention
of the grant of the patent:
**28.05.1997 Bulletin 1997/22**

(51) Int Cl.6: **G05D 13/62**, H02P 7/00,
G05B 9/03, G06F 11/16

(21) Application number: **90103760.6**

(22) Date of filing: **26.02.1990**

(54) **Multiplexed digital control device**

Digitaler Vielfach-Regler

Dispositif de contrôle numérique multiplexe

(84) Designated Contracting States:
**CH DE FR GB LI SE**

(30) Priority: **10.03.1989 JP 58803/89**

(43) Date of publication of application:
**12.09.1990 Bulletin 1990/37**

(73) Proprietor: **KABUSHIKI KAISHA TOSHIBA**
**Kawasaki-shi, Kanagawa-ken 210 (JP)**

(72) Inventor: **Kuroiwa, Akihiko**
**Fuchu-Shi, Tokyo-To (JP)**

(74) Representative: **Liesegang, Roland, Dr.-Ing. et al**
**FORRESTER & BOEHMERT**
**Franz-Joseph-Strasse 38**
**80801 München (DE)**

(56) References cited:
GB-A- 2 030 334           US-A- 3 829 668
US-A- 4 593 396           US-A- 4 667 284

- PATENT ABSTRACTS OF JAPAN vol. 12, no. 354
  (P-761), 22 September 1988; & JP-A-63108403
- PATENT ABSTRACTS OF JAPAN vol. 1,
  no.290(P-503), 2 October 1986; & JP - A -
  61109102
- PATENT ABSTRACTS OF JAPAN vol. 9, no. 253
  (P- 395)(1976), 11 October 1985; & JP - A -
  60103402
- PATENT ABSTRACTS OF JAPAN vol. 1, no. 41
  (P-429), 18 February 1986; & JP - A - 60189002
- PATENT ABSTRACTS OF JAPAN vol. 12, no. 76
  (P-675), 10 March 1988; & JP - A - 62214402

**Description**

The present invention relates to a multiplexed digital control device according to the preamble of claim 1. Such a device is suitable for use as a control device which is required to perform a high speed real time control with high reliability.

The JP-A-63 108403 describes a tracking system for a triplex system integration signal which comprises a plurality of controllers for outputting integration signals and selection means for selecting an intermediate value and directing it to a final control element.

A multiplexed data bus structure is disclosed in US-A-4,677,284, for selecting from plural independent subsystems the one subsystem which is functioning most normally.

A multiplexed control device has been proposed which has a plurality of control circuits provided for a common controlled system and operated according to a common command and a common controlled variable to obtain a respective manipulated variable and to select a specific manipulated variable, such as manipulated variable having a middle value, from the obtained manipulated variables by means of a signal selection circuit and to output it as a final manipulated variable $Y_o$. The system to be controlled is controlled according to the final manipulated variable $Y_o$. The controlled variable is obtainable from the controlled system.

In such multiplexed control device as mentioned above, manipulated variables at outputs of the respective control circuits are equal to each other when the operations of these control circuits are normal. Assuming that there are three control circuits, that values of manipulated variables $y_a$, $y_b$ and $y_c$ obtained at outputs of these circuits are 99, 100 and 101, respectively, and that the signal selection circuit operates to select a median, the signal selection circuit selects the median $y_b$ and outputs it as the final manipulated variable $y_o$.

If the second control circuit malfunctions and provides $y_b = 0$, the signal selection circuit selects $Y_a = 99$ as the median and outputs it as the final manipulated variable $Y_o$. If $y_b$ becomes 200, the signal selection circuit selects $y_c = 101$ as the median and provides it as the final manipulated variable $Y_o$.

Thus, the output manipulated variable $Y_o$ of the control device as a whole becomes a value within a range from the minimum value (99) and the maximum value (101) of the output manipulated variables $y_a$, $Y_b$ and $y_c$ of the three control circuits operating normally even if any of these control circuits malfunctions, so that the malfunctioning control circuit does not directly affect the environmental construction.

In a case where the respective control circuits include integrating elements, however, operation errors for them are accumulated by the integrating elements to cause error to be increased. Such defects have been avoided by an error compensation circuit. In a system including such an error compensation circuit having a correction gain K, a deviation between the manipulated variable $Y_o$ from the signal selection circuit and an output manipulated variable $y_a$ of the control circuit including such an integrating element is given positive-feedback through the error correction circuit to an input side of the integrating element. A correction to be performed by this error correction circuit continues until $Y_o$ becomes equal to $y_a$. As a result, the terms of integration of the outputs of the individual control circuits are normally coincident with each other, so that the multiplexed control device is kept stable.

In a case where such a multiplexed control device is realized by using digital technologies however, the data transmission between the respective control systems and operation of the correction circuit become complicated. Therefore, in such a case, the sampling period for control must be lengthened and thus it cannot be applied to a control system in which considerably varying, high speed signals are to processed.

In JP-A-61 109102 a controller for a multiplex control system is described which comprises a deviation operator and a PI operator. A selected intermediate value signal is compared with an operation signal by a deviation comparator to correct an output signal.

SUMMARY OF THE INVENTION

An object of the present invention is to provide a multiplexed digital control device having a new controller structure which can reliably operate in control systems which process considerably varying and high speed signals.

The above object is achieved, according to the present invention, by a multiplexed digital control device comprising the features of claim 1.

In each of the control systems, data such as input data, integration data and/or operation data, etc., which are necessary to perform a control operation are inputted, at a time when they are supplied or produced, to a signal selection circuit of the control system, in which they are stored and transmitted to other control systems in the form of data with address information. These data transmitted from other control systems are received and then stored into memories. At this time, the addresses of the memories for storing data are designated by address information added to data. In order to carry out the control operation, data of the control system and other control systems are read out from the respective memories. These data are compared with each other and then one of them is selected according to the predetermined logic. Thus, identical control operations are performed on identical data in the respective control systems, so that the identification of output of the respective control systems can be held.

Since, in this case, internal variables such as integration data is corrected not gradually but at every control sampling, the equality of data in the respective control systems is maintained. For a complicated control system which has a number of outputs and a number of internal variables, it is possible to shorten the sampling period and realize high speed control.

The sub-signal selection means serves to correct a first value corresponding to a median of the outputted manipulated variables of the respective control systems obtained at a preceding sampling time with a value obtained by multiplying a deviation between a second value corresponding to a median of commands obtained in the respective control systems at a current sampling and a third value corresponding to a median of controlled variables of the respective control systems at a current sampling with a gain to obtain an output manipulated variable of the device at the current sampling.

BRIEF DESCRIPTION OF THE DRAWING

In the accompanying drawings,

Fig. 1 is a block diagram showing the entire configuration of a multiplexed digital control device according to the present invention;
Fig. 2 is a block diagram showing an internal configuration of each control circuit of the multiplexed digital control device according to the present invention;
Fig. 3 is a flowchart showing an operation of the control device shown in Fig. 2;
Fig. 4 illustrates an operation of a CPU and memories of the control device shown in Fig. 2;
Fig. 5 is a graph showing examples of motor speed and response of an armature current when a speed command is stepped up; and
Fig. 6 is a block diagram showing an internal configuration of each control circuit of another embodiment of a multiplexed digital control device.

DESCRIPTION OF THE PREFERRED EMBODIMENTS

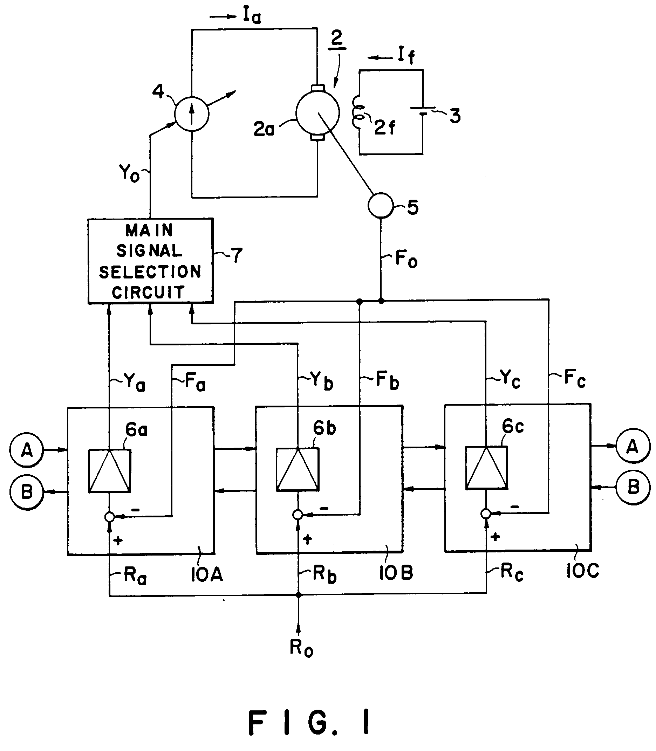

Fig. 1 shows an embodiment of a multiplexed digital control device according to the present invention when applied to a speed control for a D.C. motor. In this embodiment, the multiplexed digital control device includes three control circuits having identical construction. In order to control the speed of a D.C. motor 2 having an armature 2a and a field winding 2f, a constant field current $I_f$ is supplied from a field power source 3 to the field winding 2f and an armature current $I_a$ supplied from a variable current source 4 to the armature 2a is regulated. A rotational speed $F_o$ of the D.C. motor 2 is detected by a speed detector 5 as a controlled variable which is inputted to the three control circuits 10A, 10B and 10C as speed feedback signals $F_a$, $F_b$ and $F_c$, respectively. The feedback signals $F_a$, $F_b$ and $F_c$ supplied to the respective control circuits 10A, 10B and 10C are compared with speed commands $R_a$, $R_b$ and $R_c$ obtained from a common speed command $R_o$, respectively, and

manipulated variables $Y_a$, $Y_b$ and $Y_c$ which are necessary to make deviations between the speed commands and feedback signals zero, are obtained by speed controllers 6a, 6b and 6c by taking manipulated variables obtained by other control circuits into consideration as will be described later. The manipulated variables $Y_a$, $Y_b$ and $Y_c$ are supplied to a main signal selection circuit 7 from which a manipulated variable having a specific value is outputted according to a predetermined logic as a final manipulated variable $Y_s$. The main signal selection circuit 7 is constructed as a median selection circuit (MVG), for example, which compares the manipulated variables $Y_a$, $Y_b$ and $Y_c$ with each other and selects one of them which corresponds to a median as a final output manipulated variable $Y_o$. The variable current source 6 responds to the final oputput manipulated variable $Y_o$ to control the armature current $I_a$.

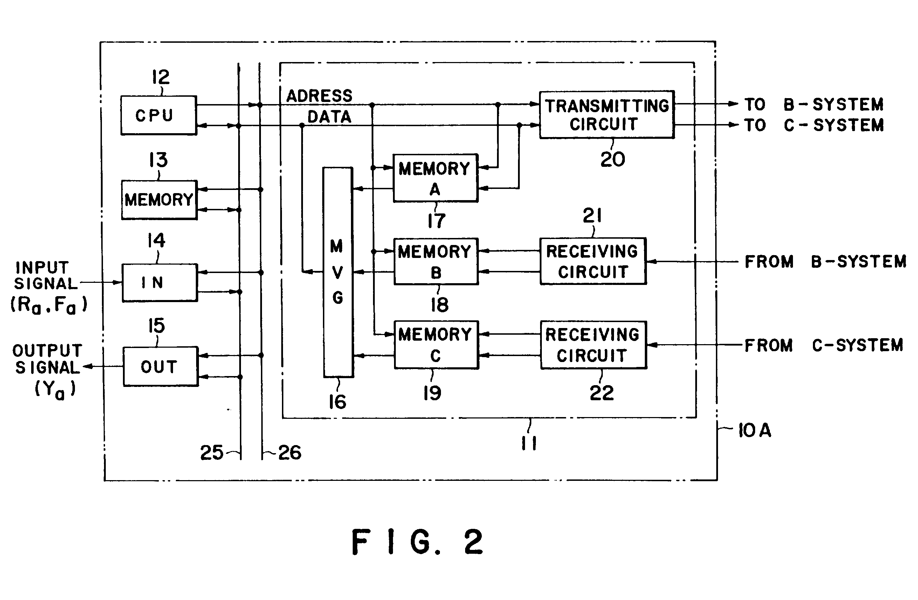

Fig. 2 shows an internal construction of one (10A) of the control circuits 10A, 10B and 10C which have identical construction.

The control circuit 10A includes a manipulated variable processing circuit 11, a CPU 12, a memory 13, an input circuit (IN) 14 and an output circuit (OUT) 15. The CPU 12, the manipulated variable processing circuit 11, the memory 13, the input circuit 14 and the output circuit 15 are mutually connected through a data bus 25 and an address bus 26. The input circuit 14 is used to input the speed command $R_a$ and the speed feedback $F_a$ and the output circuit 15 is used to provide the manipulated variable $Y_a$. The manipulated variable processing circuit 11 includes the signal selection circuit 16 such as the median selection circuit (MVG), memories 17, 18 and 19, a transmitting circuit 20 and receiving circuits 21 and 22. The memories 17, 18 and 19 serve to store data from the control circuit 10A for an A system, the control circuit 10B for a B system and the control circuit 10C for a C system, respectively, and the receiving circuits 21 and 22 are used to introduce data from the B and C system control circuits 10B and 10C to the control circuit 10A. The transmitting circuit 20 transmits A system data to the control circuits 10B and 10C. The signal selection circuit 16 selects, among data of the A, B and C systems, which are stored in the memories 17, 18 and 19, one having a specific value which corresponds to a median and stores the latter in an internal memory thereof.

The control circuits 10B and 10C have identical internal configurations to that of the control circuit 10A.

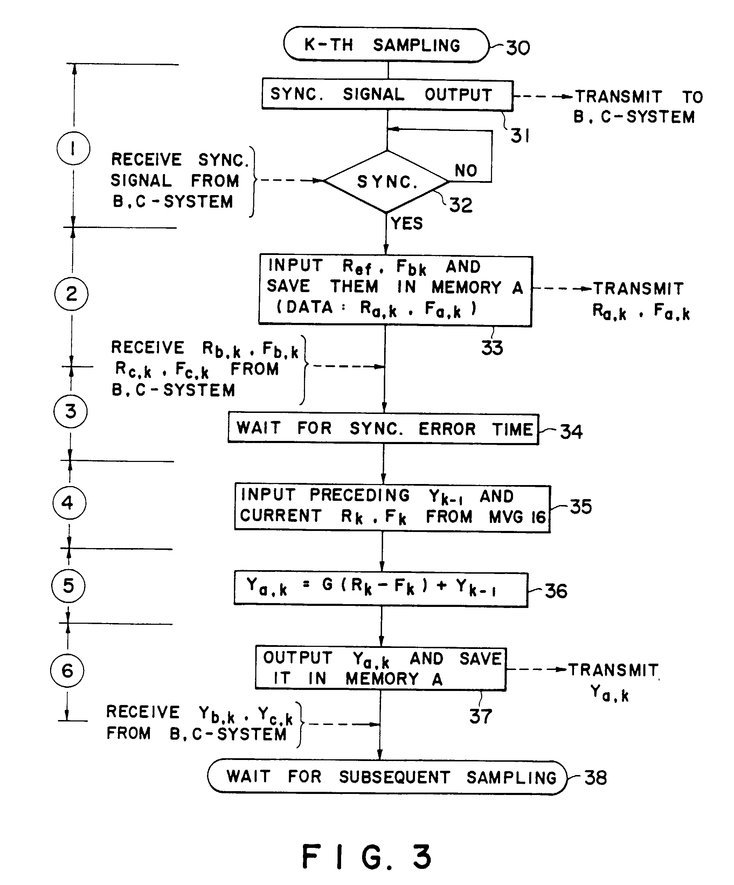

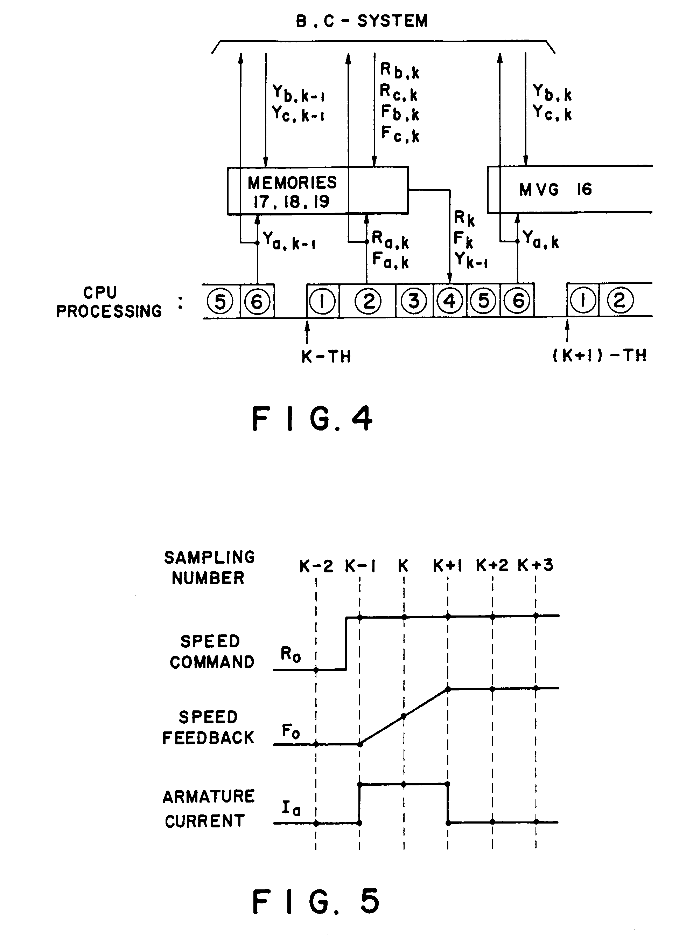

An example of control operation to be performed in the control device shown in Fig. 2 will be described with reference to a flowchart shown in Fig. 3 and an operation of the CPU and the memories shown in Fig. 4.

In Fig. 3, a series of operations to be performed in the A system control circuit 10A during a period after K-th sampling step 30 up to idling step 38 waiting for (k-1)-th sampling is shown. After the K-th sampling, the A system control circuit 10A provides a synchronizing signal in step 31 through the transmitting circuit 20 to the B and C system control circuits 10B and 10C according to a known system. Then, the circuit 10A receives synchronizing signals from the control circuits 10B and 10C and, after a synchronization among the control circuits 10A, 10B and 10C is confirmed in step 32, the control circuit 10A receives through the input circuit 14 respective input data, i.e., a speed command $R_{a,k}$ and speed feedback $F_{a,k}$ at k-th sampling and stores them in the memory 17. At the same time, the circuit 10A transmits them through the transmitting circuit 20 to the control circuits 10B and 10C in step 33. The control circuit 10A also receives speed command data $R_{b,k}$ and $R_{c,k}$ and speed feedback data $F_{b,k}$ and $F_{c,k}$ from the control circuits 10B and 10C through the receiving circuits 21 and 22 thereof and stores them in the memories 18 and 19, respectively. Thereafter, the circuit 10A waits for a time corresponding to a synchronizing error time in step 34. Then, in step 35, a median of the data obtained by the signal selection circuit 16 at a preceding sampling time, i.e., at (k-1)th sampling time, i.e., a manipulated variable $Y_{k-1}$ corresponding to a median of respective manipulated variables $Y_{a,k-1}$ and $Y_{c,k-1}$, a speed command $R_k$ corresponding to a median of speed commands $R_{a,k}$, $R_{b,k}$ and $R_{c,k}$ obtained in a current sampling time and a speed feedback $F_k$ corresponding to a median of speed feedback signals $F_{a,k}$, $F_{b,k}$ and $F_{c,k}$ obtained in this sampling time are delivered from the signal selection circuit 16 to the CPU 12. The CPU 12 is responsive to the inputs from the signal selection circuit 16 to perform the following operation to thereby obtain a manipulated variable $Y_{a,k}$ at k-th sampling time of the A system, in the step 36.

$$Y_{a,k} = G(R_k - F_k) + Y_{k-1} \qquad (1)$$

where G is a gain of the speed control system in the control circuit 10A.

In step 37, the manipulated variable $Y_{a,k}$ obtained according to the equation (1) is outputted from the output circuit (OUT) 15 as an output of the control circuit 10A, stored in the memory 17 and transmitted through the transmitting circuit 20 to the other control circuits 10B and 10C and the manipulated variables $Y_{b,k}$ and $Y_{c,k}$ transmitted from the control circuits 10B and 10C are received through the receiving circuits 21 and 22 and stored in the memories 18 and 19, respectively. The respective data thus stored are used for a data processing at a subsequent (K+1)-th sampling. Thereafter, in step 38, the operation becomes idle until the (K+1)-th sampling.

The same operation is performed simultaneously in each of the control circuits 10B and 10C to store, transmit, receive and output respective data.

The manipulated variables $Y_{a,k}$, $Y_{b,k}$ and $Y_{c,k}$ of the respective systems obtained in this manner are introduced into the signal selection circuit 7 in which they are compared with each other to select a median of them as the manipulated variable $Y_{o,k}$ of the whole device at K-th sampling time. This manipulated variable is the final manipulated variable $Y_o$ on which the output current of the variable current source 4, i.e., the armature current $I_a$ is controlled.

As described, by transmitting data mutually updated between the respective control systems, it is possible to minimize the amount of data transmitting/receiving and eliminate the time necessary to wait for respective data. Therefore, in the above described control device, the sampling period can be shortened, so that it can be applied properly to even highly variable, high speed signal processing.

Waveforms in Fig. 5 show the relationship between a speed command $R_o$, a speed feedback $F_o$ and an armature current $I_a$ at respective sampling times numbered K-2, K-1, K, K+1, K+2 and K+3, in which the speed command $R_o$ is stepped up immediately before the K-1 sampling. When the stepped-up speed command $R_o$ is obtained as a sampling value at the K-1 sampling time, the manipulated variable $Y_o$ is also stepped up according to the result of data processing mentioned above. Thus, the armature current $I_a$ from the variable current source 4 is stepped up after the K-1 sampling time to increase the speed feedback $F_o$ gradually to thereby accelerate the motor 2. When the motor speed and hence the speed feedback $F_o$ becomes equal to the speed command $R_o$ at the K-1 sampling time, the armature current $I_a$ is reduced to its initial value, so that the acceleration disappears and steady operation of the motor is established according to the new speed command.

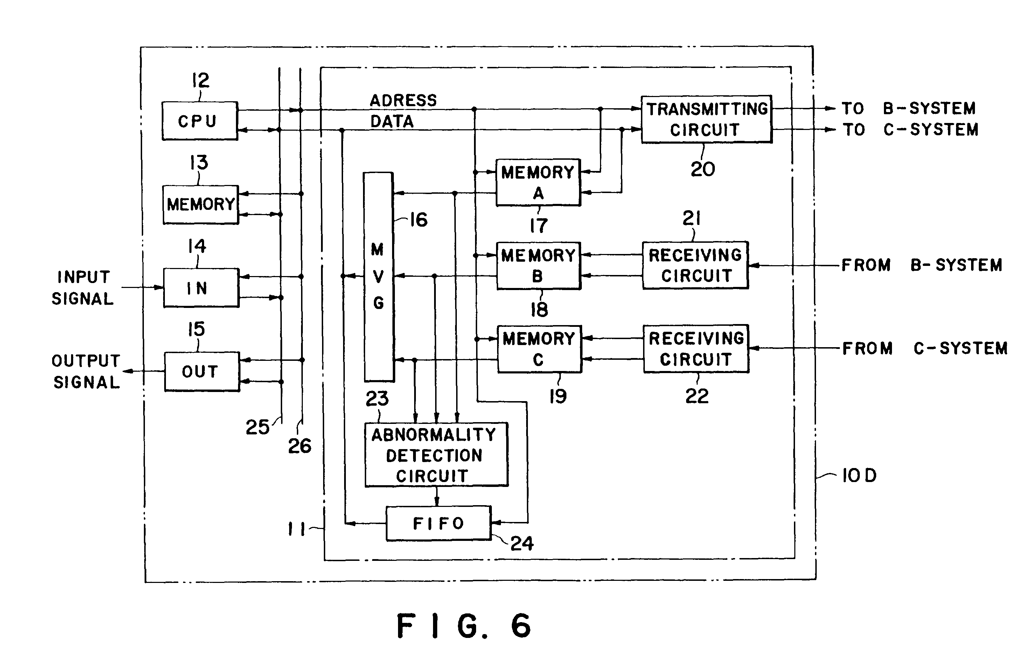

Fig. 6 is a block diagram of another embodiment of the present invention. Components in Fig. 6 which are the same as or similar to those shown in Fig. 2 are depicted by same reference numerals, respectively. A control circuit 10D in Fig. 6 comprises an abnormality detection circuit 23 responsive to data stored in memories 17, 18 and 19 for detecting an abnormality thereof and a first-in/first-out (FIFO) memory 24 connected to an output of the abnormality detection circuit.

In the control circuit 10D shown in Fig. 6, a CPU 12 reads necessary data of three control systems from the memories 17, 18 and 19 of a manipulated variable processing circuit 11 and a signal selection circuit 16 selects a median thereof. Simultaneously, the abnormality detection circuit 23 compares data for the three control circuits to obtain a deviation on which an abnormality is detected. When an abnormality is detected, an address of the data and the number indicative of a control system determined as abnormal are stored in the FIFO memory 24. The FIFO memory 24 includes a counter which counts the number of storings, so that it can output the number of abnormality detections, data detected as abnormal and the address thereof when requested by the CPU 12.

According to the control circuit shown in Fig. 6, not only the triplexed median selection but also the checking of abnormal data for estimation of location of malfunction become possible without increasing workload of the CPU 12. Therefore, it is possible to easily add an estimation function of abnormal location to a high speed control system.

## Claims

1. A multiplexed digital control device comprising:

a plurality of control systems (10A, 10B, 10C) each of which outputs a manipulated variable necessary to make a controlled variable from a common controlled system coincident with a common command; and
main signal selection means (7) for selecting a specific signal among said manipulated variables outputted from said plurality of control systems, according to a predetermined logic, wherein each of said plurality of control systems comprises:
input means (14) for inputting said common command and said common controlled variable;
a controller (12) for carrying out a control operation;
a first memory (17) for storing an internal data obtained as a result of said control operation;
manipulated variable processing means (11) including:

- transmitting means (20) for directly transmitting said internal data to the other control systems;
- receiving means (21, 22) for receiving said internal data of said other control systems transmitted thereto;
- second memories (18, 19) for storing said internal data transmitted from said other control systems and received by said receiving means (21, 22);
- sub-signal selection means (16) for reading out said internal data, from said first and second memories (17; 21, 22), and selecting a specific data from said data readout, according to said predetermined logic, said controller (12) operating said manipulated variable on the basis of the specific data selected by said sub-signal selection means (16); and

output means (15) for outputting said manipulated variable determined by said sub-signal selection means (16), **characterized** in that said controller (12) is a CPU;
said CPU (12), said input means (14), said first memory (17), said manipulated variable processing means (11) and said output means (15) are mutually connected through a data bus (25) and an adress bus (26);
said first memory (17) also stores said common command and said common controlled variable read in via said input means (14);
said transmitting means (20) also transmits adress information associated to said internal data; and
said second memories (18, 19) store said internal data transmitted from said other control systems at the addresses designated by the adress information transmitted.

2. The device claimed in claim 1, wherein said main signal selection means (7) serves to select one of said manipulated variables outputted from said respective control systems which corresponds to a median.

3. The device claimed in claim 1 or 2, wherein said sub signal selection means (16) serves to select one of said internal data of said respective control systems for an identical input signal, which corresponds to a median.

4. The device claimed in claim 3, wherein said sub signal selection means (16) serves to correct a first value corresponding to a median of said outputted manipulated variables of said respective control systems obtained at a preceding sampling time with a value obtained by multiplying a deviation between a second value corresponding to a median of commands obtained in said respective control systems at a current sampling and a third value corresponding to a median of controlled variables of said respective control systems at a current sampling with a gain to obtain an output manipulated variable of said device at the current sampling.

5. The device claimed in one of the preceding claims 1, further comprising abnormality detection means (23) for detecting an abnormality of said internal data stored in said first and second memories, and a third memory (24) for storing an internal data detected by said abnormality detection means as being abnormal.

6. The device claimed in claim 5, wherein said third memory (24) comprises a first-in/first-out memory.

## Patentansprüche

1. Digitale Multiplex-Steuereinrichtung mit

mehreren Steuersystemen (10A, 10B, 10C), von denen jedes eine manipulierte Variable ausgibt, die notwendig ist, um eine gesteuerte Variable von einem gemeinsamen gesteuerten System mit einem gemeinsamen Befehl in Übereinstimmung zu bringen; und

einer Hauptsignal-Auswahlvorrichtung (7) zum Auswählen eines speziellen Signals aus den manipulierten Variablen, welche von den mehreren Steuersystemen ausgegeben werden, gemäß einer vorgegebenen Logik, wobei jedes der mehreren Steuersysteme folgende Merkmale aufweist:

eine Eingabevorrichtung (14) zum Eingeben des gemeinsamen Befehls und der gemeinsamen gesteuerten Variable;

eine Steuereinrichtung (12) zum Ausführen einer Steueroperation;

einen ersten Speicher (17) zum Speichern interner Daten, welche als ein Ergebnis der Steueroperation erhalten werden;

eine Verarbeitungsvorrichtung (11) für die manipulierte Variabel, mit:

- einer Übertragungsvorrichtgung (20) zum direkten Übertragen der internen Daten zu den anderen Steuersystemen;
- einer Empfangsvorrichtung (21, 22) zum Empfangen der internen Daten der anderen Steuersysteme, welche zu dieser übertragen wurden;
- zweite Speicher (18, 19) zum Speichern der internen Daten, welche von den anderen Steuersystemen übertragen und von der Empfangsvorrichtung (21, 22) empfangen wurden;
- eine Untersignal-Auswahlvorrichtung (16) zum Auslesen der internen Daten aus dem ersten und den zweiten Speichern (17; 21, 22) und zum Auswählen spezieller Daten aus den ausgelesenen Daten gemäß einer vorgegebenen Logik, wobei die Steuereinrichtung (12) die manipulierte Variable auf der Basis der speziellen Daten verarbeitet, welche von der Untersignal-Auswahlvorrichtung (16) ausgewählt wurden; und

eine Ausgabevorrichtung (15) zum Ausgeben der manipulierten Variable, welche von der Untersignal-Auswahlvorrichtung (16) bestimmt wurde,

dadurch **gekennzeichnet,** daß

die Steuereinrichtung (12) eine CPU ist;

die CPU (12), die Eingabevorrichtung (14), der erste Speicher (17), die Verarbeitungsvorrichtung (11) für die manipulierte Variable und die Ausgabevorrichtung (15) gemeinsam durch ein Datenbus (25) und einen Adressenbus 826) verbunden sind;

der erste Speicher (17) auch den gemeinsamen Befehl und die gemeinsame gesteuerte Variable speichert, welche über die Eingabevorrichtung (14) eingelesen wurden;

die Übertragungsvorrichtung (20) auch Adresseninformation überträgt, welche zu den internen Daten gehört; und

die zweiten Speicher (18, 19) die von den anderen Steuersystemen übertragenen internen Daten bei den Adressen speichern, welche durch die übertragene Adresseninformation bezeichnet werden.

2. Einrichtung nach Anspruch 1, bei der die Hauptsignal-Auswahlvorrichtung (7) zum Auswählen einer der manipulierten Variablen dient, welche von den jeweiligen Steuersystemen ausgegeben wird, welche einem Mittelwert entspricht.

3. Einrichtung nach Ansprüchen 1 oder 2, bei der die Untersignal-Auswahlvorrichtung (16) zum Auswählen eines der internen Daten der jeweiligen Steuersysteme für ein identisches Eingangssignal, welches einem Mittelwert entspricht, dient.

4. Einrichtung nach Anspruch 3, bei der die Untersignal-Auswahlvorrichtung (16) dazu dient, einen ersten Wert, der einem Mittelwert der ausgegebenen manipulierten Variablen der jeweiligen Steuersysteme entspricht, der bei einer vorangegangenen Abtastzeit erhalten wurde, mit einem Wert zu korrigieren, der durch Multiplizieren einer Abweichung zwischen einem zweiten Wert, der einem Mittelwert der Befehle entspricht, die bei einer laufenden Abtastung in den jeweiligen Steuersystemen erhalten wurden, und einem dritten Wert, der einem Mittelwert der gesteuerten Variablen der jeweiligen Steuersysteme bei einer laufenden Abtastung entspricht, mit einer Verstärkung erhalten wird, um eine manipulierte Ausgangsvariable der Einrichtung bei der laufenden Abtastung zu erhalten.

5. Einrichtung nach einem der vorangehenden Ansprüche, mit einer Anormalitäts-Erfassungsvorrichtung (23) zum Erfassen einer Anormalität der internen Daten, welche in den ersten und den zweiten Speichern gespeichert sind, und einem dritten Speicher (24) zum Speichern interner Daten, welche von der Anormalitäts-Erfassungsvorrichtung als anormal erfaßt wurden.

6. Einrichtung nach Anspruch 5, bei der der dritte Speicher (24) einen FIFO-Speicher aufweist.

**Revendications**

1. Dispositif de commande numérique multiplexé comprenant :

une pluralité de systèmes de commande (10A, 10B, 10C) dont chacun fournit une variable manipulée nécessaire pour fabriquer une variable commandée à partir d'un système commandé commun coïncidant avec une commande commune ; et

un moyen de sélection de signal principal (7) pour sélectionner un signal spécifique parmi lesdites variables manipulées fournies par ladite pluralité de systèmes de commande, selon une logique prédéterminée, dans laquelle chacun de ladite pluralité de systèmes de commande comprend :

un moyen d'entrée (14) pour introduire lesdites commandes communes et ladite variable commandée commune ;

un dispositif de commande (12) pour réaliser un fonctionnement de commande ;

une première mémoire (17) pour stocker des données internes obtenues comme résultat dudit fonctionnement de commande ;

un moyen de traitement de variable manipulée (11) comprenant :

- un moyen de transmission (20) pour transmettre directement lesdites données internes aux autres systèmes de commande ;
- un moyen de réception (21, 22) pour recevoir lesdites données internes desdits autres systèmes de commande transmis à celui-ci ;
- des secondes mémoires (18, 19) pour stocker lesdites données internes transmises par lesdits autres systèmes de commande et reçues par ledit moyen de réception (21, 22) ;
- un moyen de sélection de sous-signal (16) pour extraites lesdites données internes, desdites première et seconde mémoires (17 ; 21, 22), et pour sélectionner des données spécifiques par ladite extraction de données, selon ladite logique prédéterminée, ledit dispositif de commande (12) actionnant ladite variable manipulée sur la base des données spécifiques sélectionnées par ledit moyen de sélection de sous-signal (16) ; et

un moyen de sortie (15) pour fournir lesdites variables manipulées déterminées par ledit moyen de sélection de sous-signal (16), caractérisé en ce que

ledit dispositif de commande (12) est un CPU ;
ledit CPU (12), ledit moyen d'entrée (14), ladite première mémoire (17), ledit moyen de traitement de variable manipulée (11) et ledit moyen de sortie (15) sont mutuellement connectés via un bus de données (25) et un bus d'adresse (26) ;

ladite première mémoire (17) stocke aussi ladite commande commune et ladite variable commandée commune lues via ledit moyen d'entrée (14) ;

ledit moyen de transmission (20) transmet aussi des informations d'adresse associées auxdites données internes ; et

lesdites secondes mémoires (18, 19) stockent lesdites données internes transmises par lesdits autres systèmes de commande aux adresses désignées par les informations d'adresse transmises.

2. Dispositif selon la revendication 1, dans lequel ledit moyen de signal (7) sert à sélectionner une desdites variables manipulées fournies par lesdits systèmes de commande respectifs qui correspondent à une moyenne.

3. Dispositif selon la revendication 1 ou 2, dans lequel ledit moyen de sélection de sous-signal (16) sert à sélectionner une desdites données internes desdits systèmes de commande respectifs pour un signal d'entrée identique, qui correspond à une moyenne.

4. Dispositif selon la revendication 3, dans lequel ledit moyen de sélection de sous-signal (16) sert à corriger une première valeur correspondant à une moyenne desdites variables manipulées fournies desdits systèmes de commande respectifs obtenue au moment de l'échantillonnage précédent avec une valeur obtenue en multipliant un écart entre une seconde valeur correspondant à une moyenne des commandes obtenue dans lesdits systèmes de commande respectifs au moment de l'échantillonnage actuel et une troisième valeur correspondant à une moyenne des variables commandées desdits systèmes de commande respectifs au moment de l'échantillonnage actuel avec un gain pour obtenir une variable manipulée de sortie dudit dispositif au moment de l'échantillonnage actuel.

5. Dispositif selon l'une quelconque des revendications précédentes, comprenant en outre un moyen de détection d'anomalie (23) pour détecter une anomalie desdites données internes stockées dans lesdites première et secondes mémoires, et une troisième mémoire (24) pour stocker des données internes détectées par ledit moyen de détection d'anomalie comme étant anormales.

6. Dispositif selon la revendication 5, dans lequel ladite troisième mémoire (24) comprend une mémoire FIFO premier élément entré/premier élément sorti.

F I G. 1

# FIG. 2

EP 0 386 585 B1

```
                    ┌─────────────────────────┐
                    │    K-TH  SAMPLING       │──30
                    └─────────────────────────┘
                                 │
                    ┌─────────────────────────┐        TRANSMIT  TO
                    │  SYNC.  SIGNAL  OUTPUT   │─ ─ ─→  B.C-SYSTEM
                    └─────────────────────────┘
                                 │            ┌────┐
  ①   RECEIVE SYNC.           ╱◇╲           │    │
      SIGNAL  FROM   ─ ─ →   ╱     ╲    NO    │    │
      B.C-SYSTEM             ╲ SYNC. ╲───────┘ 31
                              ╲     ╱
                               ╲◇╱  32
                                │
                              YES
                                │
  ②                 ┌─────────────────────────┐
                    │ INPUT  R_ef . F_bk  AND  │        TRANSMIT
                    │ SAVE  THEM  IN MEMORY A  │─ ─ ─→  R_a,k . F_a,k
                    │ (DATA : R_a,k , F_a,k )  │
                    └─────────────────────────┘
                                        33
      RECEIVE  R_b,k , F_b,k
  ③   R_c,k , F_c,k  FROM   ─ ─ →
      B.C-SYSTEM            ┌─────────────────────────┐
                           │ WAIT FOR SYNC. ERROR TIME│─34
                           └─────────────────────────┘
                                 │
  ④                 ┌─────────────────────────┐
                    │ INPUT PRECEDING Y_{k-1} AND│─35
                    │ CURRENT R_k . F_k  FROM MVG 16│
                    └─────────────────────────┘
                                 │
  ⑤                 ┌─────────────────────────┐
                    │ Y_a,k = G (R_k - F_k) + Y_{k-1}│─36
                    └─────────────────────────┘
                                 │
  ⑥                 ┌─────────────────────────┐       TRANSMIT
                    │ OUTPUT  Y_a,k  AND  SAVE │─ ─ ─→ Y_a,k
                    │ IT  IN  MEMORY A         │
                    └─────────────────────────┘
      RECEIVE Y_b,k . Y_c,k           37
      FROM  B.C-SYSTEM  ─ ─ →
                                 │
                    ┌─────────────────────────┐
                    │ WAIT  FOR  SUBSEQUENT SAMPLING │─38
                    └─────────────────────────┘
```

$$Y_{a,k} = G (R_k - F_k) + Y_{k-1}$$

# FIG. 3

B . C - SYSTEM

$$Y_{b,k-1}$$
$$Y_{c,k-1}$$

$$R_{b,k}$$
$$R_{c,k}$$
$$F_{b,k}$$
$$F_{c,k}$$

$$Y_{b,k}$$
$$Y_{c,k}$$

MEMORIES
17 , 18 , 19

MVG   16

$$Y_{a,k-1}$$

$$R_{a,k}$$
$$F_{a,k}$$

$$R_k$$
$$F_k$$
$$Y_{k-1}$$

$$Y_{a,k}$$

CPU
PROCESSING : ⑤ ⑥ ① ② ③ ④ ⑤ ⑥ ① ②

K - TH

(K+1) - TH

# F I G. 4

SAMPLING
NUMBER

K−2  K−1  K  K+1  K+2  K+3

SPEED
COMMAND   $R_0$

SPEED
FEEDBACK   $F_0$

ARMATURE
CURRENT   $I_a$

# F I G. 5

F I G. 6

EP 0 386 585 B1